# EUROPÄISCHE PATENTSCHRIFT

(11) **EP 0 303 731 B1**
(45) Veröffentlichungstag und Bekanntmachung des Hinweises auf die Patenterteilung: **11.08.1993**
(21) Anmeldenummer: 87112585.2
(22) Anmeldetag: 28.08.1987
(51) Int. Cl.: H01R 39/04, H01R 39/22, H02K 13/10

(54) **Kommutator für eine elektrische Maschine**
Commutator for an electrical machine
Commutateur pour une machine électrique

(30) Priorität: 19.08.1987 EP 87112050
(43) Veröffentlichungstag der Anmeldung: 22.02.1989
(73) Patentinhaber: Hübner Elektromaschinen AG, D-10924 Berlin (DE)
(72) Erfinder: Doege, Günter, D-1000 Berlin 65 (DE); Jakob, Peter, D-1000 Berlin 19 (DE); Wilhelmy, Lothar, Dr.-Ing., D-1000 Berlin 33 (DE)
(74) Vertreter: Böning, Manfred, Dr.-Ing.

(56) Entgegenhaltungen:
- DE-B- 2 143 708
- US-A- 4 415 635
- PATENT ABSTRACTS OF JAPAN, Band 9, Nr. 143 (E-322)[1866], 18. Juni 1985 & JP-A-60-26435

## Beschreibung

Die Erfindung betrifft einen Kommutator für eine elektrische Maschine mit voneinander isolierten Metall-Lamellen zur Abnahme oder Zuführung von Spannung und Strom mittels Bürsten, wobei die Lamellen zur Verbesserung des Gleitkontaktes mit den Bürsten mit einem Kontaktmaterial versehen sind, das von aggressiven Umwelteinflüssen nicht beeinträchtigt wird.

Derartige Kommutatoren werden insbesondere in der Meß-, Steuer- und Regeltechnik bei Gleichstrom-Tachometer-Dynamos verwendet, da bei letzteren - bedingt durch den hohen Abschlußwiderstand der jeweils nachgeschalteten Auswerteeinheit - die Stromdichte in den Bürsten sehr gering ist und der Einhaltung eines möglichst konstanten, d.h. nicht durch Oxyd- oder Sulfitschichten beeinflußten Übergangswiderstandes erhebliche Bedeutung zukommt.

Aus der DE-B-21 43 708 ist es bekannt, eine aus einer Goldlegierung bestehende Kontaktmaterialschicht auf einen metallischen Träger galvanisch aufzutragen oder aufzuwalzen. Nachteilig ist in beiden Fällen der hiermit verbundene Fertigungsaufwand, wobei bei der galvanischen Beschichtung aus wirtschaftlichen Gründen nur sehr geringe Schichtdicken in der Größenordnung von einigen Mikrometern in Betracht kommen und beim Aufwalzen der Anteil der Edelmetallegierung zwangsläufig vergleichsweise groß ist. Bekannt ist es schließlich, die Lamellen eines Kommutators vollständig aus einem Edelmetall oder einer Edelmetallegierung herzustellen. Dies hat zwar den Vorteil, daß eine zur Erzielung einer hohen Rundlaufgenauigkeit wünschenswerte nachträgliche spanende Bearbeitung des Kommutators möglich ist, diesem Vorteil steht indes der Nachteil eines nur in Ausnahmefällen vertretbaren hohen Aufwandes teuren Materials gegenüber.

Der Erfindung liegt die Aufgabe zugrunde, einen Kommutator der in Betracht gezogenen Gattung so auszugestalten, daß er einerseits bei großer Standzeit gute elektrische Eigenschaften bietet und andererseits einfach herstellbar ist.

Diese Aufgabe wird erfindungsgemäß dadurch gelöst, daß die Lamellen innerhalb der Lauffläche des Kommutators jeweils mit mindestens einer Ausnehmung versehen sind und daß in jeder Ausnehmung eine mit der Lamellen-Oberfläche bündige Kontaktmaterialeinlage befestigt ist.

Da beim erfindungsgemäßen Kommutator nur der die Ausnehmungen aufweisende Teil der Lauffläche mit teuren, gegen die Einwirkung von aggresiven Umwelteinflüssen unempfindlichen Materialien ausgestattet ist, lassen sich die Kosten für eben diese Materialien in vernünftigen Grenzen halten. Trotzdem ist eine nachträgliche Bearbeitung des Kommutators zur Erzielung einer hohen Rundlaufgenauigkeit möglich, da die nur auf einen Teil der Lauffläche beschränkten Ausnehmungen im Rahmen eines vertretbaren Materialaufwandes hinreichend tief sein können.

Als besonders vorteilhaft erweist es sich, wenn die Ausnehmungen als in Umfangsrichtung des Kommutators verlaufende Nut ausgebildet sind, die eine vorzugsweise etwa 0,5 mm hohe Edelmetall-Kontaktmaterialeinlage aufnimmt, deren Breite kleiner als die Breite der Bürsten ist.

Weitere Merkmale und Einzelheiten der Erfindung ergeben sich aus den Unteransprüchen und der nachfolgenden Beschreibung mehrerer in der beigefügten Zeichnung dargestellter Ausführungsbeispiele. Es zeigen:
- Fig. 1: schematisch in perspektivischer Ansicht einen Kommutator,
- Fig. 2-7: Teilschnitte durch Kommutatoren mit unterschiedlich ausgebildeten Ausnehmungen,
- Fig. 8: eine Teilansicht eines Kommutators und
- Fig. 9-10: Draufsichten auf einzelne Lamellen eines Kommutators.

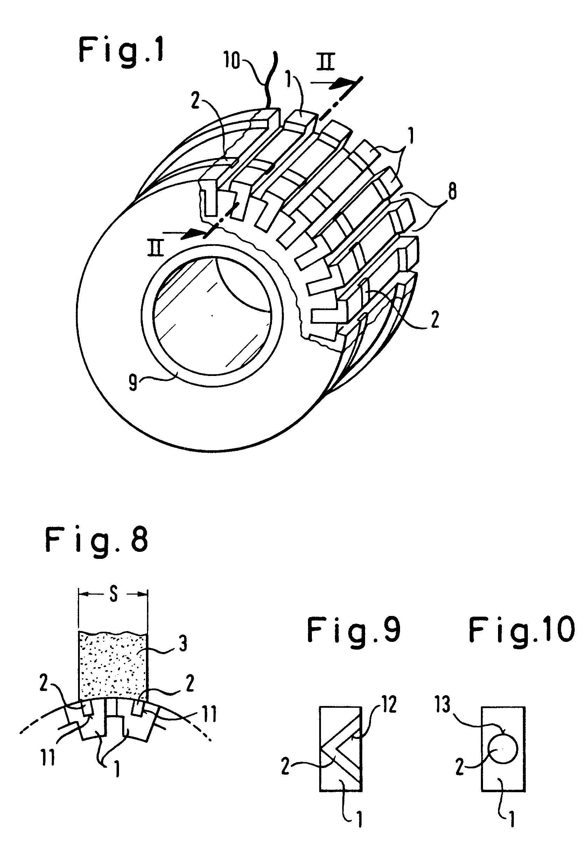

Gemäß Fig. 1 besteht der Kommutator aus einer Vielzahl von Lamellen 1 aus Kupfer oder einer Kupferlegierung. Sie werden von einem zylinderförmigen Träger 7 aus isolierendem Kunststoff gehalten. Im äußeren Umfangsbereich sind die Lamellen 1 gegeneinander durch radial verlaufende Schlitze 8 elektrisch voneinander isoliert. Der Kommutator wird mit einer Nabe 9 zusammen mit einem Läufer auf eine Welle (nicht dargestellt) aufgesetzt und mit diesem drehfest verbunden. Jeder der Lamellen 1 ist über Wicklungsanschlüsse 10 mit einer entsprechenden Zahl von Läuferwicklungen (nicht dargestellt) verbunden. Aus Gründen der Übersichtlichkeit ist lediglich ein einziger derartiger Wicklungsanschluß 10 schematisch wiedergegeben.

In der Lauffläche des Kommutators ist in dem in Fig. 1 dargestellten Beispiel in die einzelnen Lamellen 1 jeweils eine Edelmetalleinlage 2 eingebracht, deren wirksame Oberfläche nur einen Teil der gesamten Lauffläche einnimmt.

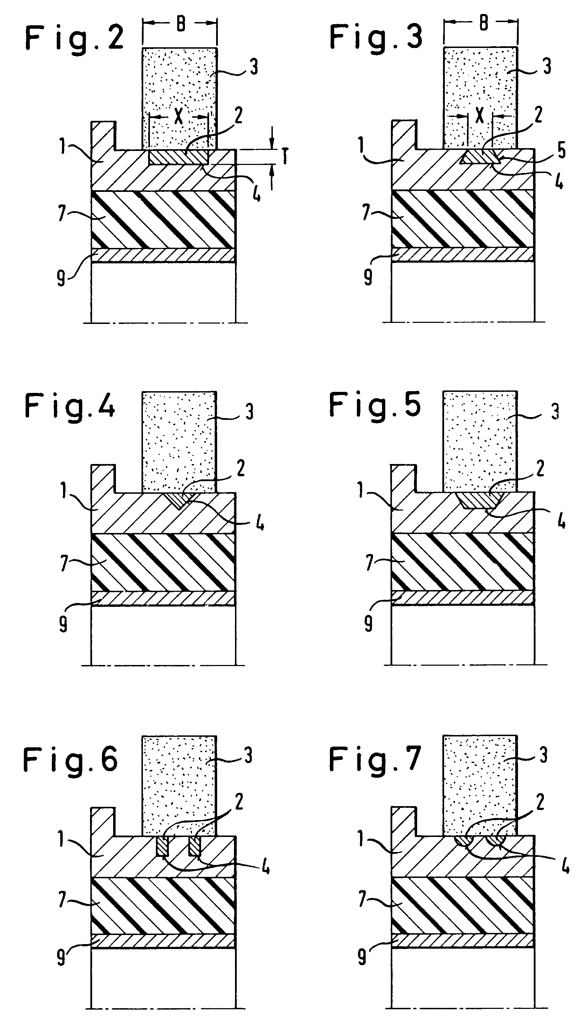

In Fig. 2 ist ein Querschnitt entlang der Schnittlinie A-A für ein erstes Beispiel veranschaulicht. Gleiche Teile wie in Fig. 1 sind hierbei - ebenso wie in den nachfolgend beschriebenen Figuren - mit gleichen Bezugszeichen versehen.

Allen Beispielen ist gemeinsam, daß in den Lamellen 1 mindestens eine in Umfangsrichtung verlaufende Nut 4 ausgebildet ist, in welcher die Edelmetalleinlagen 2 oberflächenbündig eingelegt und befestigt sind.

Die Edelmetalleinlagen 2 liegen innerhalb der Kommutatorlauffläche, welche durch die Breite einer Kohlebürste 3 bestimmt ist. Die Breite X der Einlagen ist zweckmäßigerweise kleiner als die Breite B der Kommutatorlauffläche; sie kann jedoch auch größer sein. Die Tiefe T der Nut 4, die der Höhe der Edelmetalleinlage 2 entspricht, ist so gewählt, daß der Kommutator einer spanenden Bearbeitung oder ähnlichem zur Erzielung einer großen Rundlaufeigenschaft aufgesetzt werden kann. Es ist hierbei sichergestellt, daß jederzeit eine ausreichende Höhe der Edelmetalleinlage 2 gewährleistet ist. In der Praxis bewährt sich eine Höhe der Edelmetalleinlage 2 von etwa 0,5 mm.

Anstelle eines Edelmetalls, wie Gold, Silber oder einer Legierung ist auch Elektrographit für die Einlage in die Lamellen 1 geeignet.

Die Fig. 4 zeigt einen dreieckigen und die Fig. 5 einen trapezförmigen Querschnitt der Einlage 2 und der Nut 4.

Fig. 3 veranschaulicht ein Beispiel, bei welchem die Breite X der Edelmetalleinlage 2 deutlich kleiner ist als die Breite B der Lauffläche. Es ist ferner beispielhaft ein schwalbenschwanzförmiger Querschnitt 5 der Edelmetalleinlage 2 gezeigt, mit welchem eine besonders feste Verankerung in der Lamelle 1 erreicht wird.

In Fig. 6 ist eine weitere Variante dargestellt, bei welcher innerhalb der Laufflächen zwei nebeneinanderliegende Edelmetalleinlagen 2 in die Lamelle 1 eingearbeitet sind.

Fig. 7 zeigt beispielhaft einen kreissegmentförmigen Querschnitt zweier nebeneinander angeordneter Edelmetalleinlagen 2 und der zugehörigen Nuten 4.

In Fig. 2 bis 7 ist jeweils nur eine Bürste 3 dargestellt, obwohl in der Praxis auch zwei oder mehr nebeneinander liegende Bürsten verwendet werden können.

Fig. 8 veranschaulicht einen Bogensegmentausschnitt des Kommutators mit zwei benachbarten Lamellen 1. Aus dieser Seitenansicht ist ersichtlich, daß jede Lamelle 1 mit einer in Achsrichtung des Kommutators verlaufenden Nut 11 versehen ist, die flächenbündig mit einer Edelmetalleinlage 2 ausgefüllt ist. Um einen Metallwechsel zwischen den Edelmetalleinlagen 2 und dem Kupfer, in das sie eingebettet sind, zu vermeiden, ist die Stärke S der Bürste etwas grösser bemessen als der Abstand der beiden Edelmetalleinlagen 2.

Die Fig. 1 zeigt ein Beispiel, in welchem sich die Edelmetalleinlagen 2 über die gesamte Breite der Lamellen 1 erstrecken. Um Material einzusparen, können die Edelmetalleinlagen 2 auch in sinngemäßer Entsprechung zu den Fig 2 bis 5 kürzer sein als die Breite B der Bürste 3.

In Fig. 9 und 10 sind jeweils in einer Aufsicht auf eine Lamelle 1 weitere Anordnungen für die Edelmetalleinlagen 2 gezeigt. Dabei veranschaulicht die Fig. 9 eine pfeilförmige Nut 12 mit der Edelmetalleinlage 2. Gemäß Fig. 10 ist die Edelmetalleinlage 2 in einem runden Sackloch 13 befestigt.

## Patentansprüche

1. Kommutator für eine elektrische Maschine mit voneinander isolierten Metall-Lamellen (1) zur Abnahme oder Zuführung von Spannung und Strom mittels Bürsten (3), wobei die Lamellen (1) zur Verbesserung des Gleitkontaktes mit den Bürsten (3) mit einem Kontaktmaterial versehen sind, das von aggressiven Umwelteinflüssen nicht beeinträchtigt wird, dadurch gekennzeichnet, daß die Lamellen (1) innerhalb der Lauffläche des Kommutators jeweils mit mindestens einer Ausnehmung versehen sind und daß in jeder Ausnehmung eine mit der LamellenOberfläche bündige Kontaktmaterialeinlage (2) befestigt ist.

2. Kommutator nach Anspruch 1,
dadurch **gekennzeichnet,**
daß die Kontaktmaterialeinlage (2) eine Höhe von etwa 0,5 mm hat.

3. Kommutator nach Anspruch 1 oder 2,
dadurch **gekennzeichnet,**
daß die Breite (X) der Kontaktmaterialeinlage (2) kleiner als die Breite (B) der Bürsten ist.

4. Kommutator nach einem der vorhergehenden Ansprüche,
dadurch **gekennzeichnet,**
daß die Kontaktmaterialeinlage (2) als Edelmetalleinlage ausgebildet ist.

5. Kommutator nach einem der vorhergehenden Ansprüche 1 bis 3,
dadurch **gekennzeichnet,**
daß die Kontaktmaterialeinlage (2) als Elektrographit-Einlage ausgebildet ist.

6. Kommutator nach einem der vorhergehenden Ansprüche,
dadurch **gekennzeichnet,**
daß die Ausnehmung als in Umfangsrichtung des Kommutators verlaufende Nut (4) ausgebildet ist.

7. Kommutator nach Anspruch 6,
dadurch **gekennzeichnet,**
daß in Umfangsrichtung zwei parallele Nuten (4) mit Kontaktmaterialeinlagen (2) vorhanden sind.

8. Kommutators nach einem der Ansprüche 1 bis 5,
dadurch **gekennzeichnet,**
daß die Ausnehmung als in Achsrichtung des Kommutators verlaufende Nut (11) ausgebildet ist.

9. Kommutator nach einem der Ansprüche 1 bis 5,
dadurch **gekennzeichnet,**
daß die Ausnehmung als schräg- oder pfeilförmig verlaufende Nut (12) ausgebildet ist.

10. Kommutator nach einem der Ansprüche 6 bis 9,
dadurch **gekennzeichnet,**
daß der Querschnitt der Nut (4,11,12) und der Kontaktmaterialeinlage (2) rechteckig ist.

11. Kommutator nach einem der Ansprüche 6 bis 9,
dadurch **gekennzeichnet,**
daß der Querschnitt der Nut (4,11,12) und der Kontaktmaterialeinlage (2) quadratisch, dreieckig oder trapezförmig ist.

12. Kommutator nach einem der Ansprüche 6 bis 9,
dadurch **gekennzeichnet,**
daß der Querschnitt der Nut (4,11,12) und der Kontaktmaterialeinlage (2) schwalbenschwanzförmig ist.

13. Kommutator nach einem der Ansprüche 6 bis 9,
dadurch **gekennzeichnet,**
daß die Nut (4,11,12) und die Kontaktmaterialeinlage (2) einen kreissegmentförmigen Querschnitt aufweisen.

14. Kommutator nach einem der Ansprüche 1 bis 5,
dadurch **gekennzeichnet,**
daß die Ausnehmung als radial verlaufende Öffnung ausgebildet ist.

15. Kommutator nach einem der vorhergehenden Ansprüche,
dadurch **gekennzeichnet,**
daß die Kontaktmaterialeinlage (2) mittels eines leitfähigen Klebers befestigt ist.

16. Kommutator nach einem der Ansprüche 1 bis 14,
dadurch **gekennzeichnet,**
daß die Kontaktmaterialeinlage (2) durch Löten, Schweißen oder Bördeln gehalten ist.

17. Kommutator nach einem der Ansprüche 1 bis 14,
dadurch **gekennzeichnet,**
daß die Kontaktmaterialeinlage (2) durch Flammspritzen hergestellt ist.

18. Kommutator nach einem der vorhergehenden Ansprüche,
dadurch **gekennzeichnet,**
daß zur Herstellung der Kontaktmaterialeinlage (2) Kontaktmaterial einstückig in die Nuten (4,11,12) mehrerer Kollektor-Lamellen eingebracht wird und daß es anschließend zwischen den Lamellen aufgetrennt wird.

19. Kommutator nach einem der Ansprüche 1 bis 18,
dadurch **gekennzeichnet,**
daß paßgenau vorgefertigte Kontaktmaterialeinlagen (2) in die betreffenden Nuten (4,11,12) eingebracht werden.

## Claims

1. A commutator for an electrical apparatus with metal segments (1) insulated from each other for the receipt or supply of voltage and current through brushes (3), whereby the segments (1) are provided with a contact material to improve sliding contact with the brushes (3), said contact material not being adversely affected by aggressive environmental conditions, characterised in that the segments (1) within the commutator contact surface are each provided with at least one recess and that a contact material insert (2) is secured in each recess such that it is flush with the segment surface.

2. A commutator according to Claim 1, characterised in that the contact material insert (2) has a height of approximately 0.5 mm.

3. A commutator according to either Claim 1 or Claim 2, characterised in that the width (X) of the contact material insert (2) is less than the width (B) of the brushes.

4. A commutator according to any one of the preceding claims, characterised in that the contact material insert (2) is in the form of a precious metal insert.

5. A commutator according to any one of Claims 1 to 3, characterised in that the contact material insert (2) is in the form of an electrographite insert.

6. A commutator according to any one of the preceding claims, characterised in that the recess is in the form of a slot (4) running along the periphery of the commutator.

7. A commutator according to Claim 6, characterised in that there are two parallel slots (4) with contact material inserts (2) running along the periphery.

8. A commutator according to any one of Claims 1 to 5, characterised in that the recess is in the form of a slot (11) running in the axial direction of the commutator.

9. A commutator according to any one of Claims 1 to 5, characterised in that the recess is in the form of a slot (12) with a diagonal or arrow shape.

10. A commutator according to any one of Claims 6 to 9, characterised in that the cross sections of the slot (4, 11, 12) and the contact material insert (2) are rectangular.

11. A commutator according to any one of Claims 6 to 9, characterised in that the cross sections of the slot (4, 11, 12) and the contact material insert (2) are quadratic, triangular or trapezoidal.

12. A commutator according to any one of Claims 6 to 9, characterised in that the cross sections of the slot (4, 11, 12) and the contact material insert (2) are dovetail in shape.

13. A commutator according to any one of Claims 6 to 9, characterised in that the cross sections of the slot (4, 11, 12) and the contact material insert (2) have the shape of a segment of a circle.

14. A commutator according to any one of Claims 1 to 5, characterised in that the recess is in the form of an aperture running in a radial direction.

15. A commutator according to any one of the preceding claims, characterised in that the contact material insert (2) is secured by means of a conductive adhesive.

16. A commutator according to any one of Claims 1 to 14, characterised in that the contact material insert (2) is held in place through soldering, welding or flanging.

17. A commutator according to any one of Claims 1 to 14, characterised in that the contact material insert (2) is manufactured by flame spraying.

18. A commutator according to any one of the preceding claims, characterised in that the contact material is introduced as one piece into the slots (4, 11, 12) of a number of commutator segments and is subsequently separated between the segments to form the contact material inserts (2).

19. A commutator according to any one of Claims 1 to 18, characterised in that the contact material inserts (2) are pre-formed and introduced to fit exactly into the corresponding slots (4, 11, 12).

## Revendications

1. Collecteur pour une machine électrique comportant des lamelles métalliques (1) isolées les unes des autres et servant à recevoir ou appliquer une tension ou un courant au moyen de balais (3), et dans lequel, pour améliorer le contact glissant avec les balais (3), les lamelles (1) sont pourvues d'un matériau de contact, qui n'est pas affecté par des influences corrosives de l'environnement, caractérisé en ce que les lamelles (1) sont pourvues chacune d'au moins un évidement, à l'intérieur de la surface circonférentielle du collecteur et qu'un insert (2) formé d'un matériau de contact, qui se termine de niveau avec la surface des lamelles, est fixé dans chaque évidement.

2. Collecteur selon la revendication 1, caractérisé en ce que l'insert (2) formé d'un matériau de contact possède une hauteur d'environ 0,5 mm.

3. Collecteur selon la revendication 1 ou 2, caractérisé en ce que la largeur (X) de l'insert (2) formé d'un matériau de contact est inférieure à la largeur (B) des balais.

4. Collecteur selon l'une des revendications précédentes, caractérisé en ce que l'insert (2) formé d'un matériau de contact est agencé sous la forme d'un insert en métal précieux.

5. Collecteur selon l'une des revendications précédentes 1 à 3, caractérisé en ce que l'insert (2) formé d'un matériau de contact est réalisé sous la forme d'un insert en électrographite.

6. Collecteur selon l'une des revendications précédentes, caractérisé en ce que l'évidement est agencé sous la forme d'une rainure (4) qui s'étend dans la direction circonférentielle du collecteur.

7. Collecteur selon la revendication 6, caractérisé en ce que deux rainures parallèles (4) contenant des inserts (2) formés d'un matériau de contact sont prévus dans la direction circonférentielle.

8. Collecteur selon l'une des revendications 1 à 5, caractérisé en ce que l'évidement est agencé sous la forme d'une rainure (11) qui s'étend dans la direction axiale du collecteur.

9. Collecteur selon l'une des revendications 1 à 5, caractérisé en ce que l'évidement est agencé sous la forme d'une rainure (12) qui s'étend obliquement ou sous la forme d'une flèche.

10. Collecteur selon l'une des revendications 6 à 9, caractérisé en ce que la section transversale de la rainure (4, 11, 12) et de l'insert (2) formé d'un matériau de contact est rectangulaire.

11. Collecteur selon l'une des revendications 6 à 9, caractérisé en ce que la section transversale de la rainure (4, 11, 12) et del'insert (2) formé d'un matériau de contact possède une forme carrée, triangulaire ou trapézoïdale.

12. Collecteur selon l'une des revendications 6 à 9, caractérisé en ce que la section transversale de la rainure (4, 11, 12) et de l'insert (2) formé d'un matériau de contact possède une forme en queue d'aronde.

13. Collecteur selon l'une des revendications 6 à 9, caractérisé en ce que la rainure (4, 11, 12) et l'insert (2) formé d'un matériau de contact possèdent une section transversale en forme de segment de cercle.

14. Collecteur selon l'une des revendications 1 à 5, caractérisé en ce que l'évidement est agencé sous la forme d'une ouverture radiale.

15. Collecteur selon l'une des revendications précédentes, caractérisé en ce que l'insert (2) formé d'un matériau de contact est fixé au moyen d'une colle conductrice.

16. Collecteur selon l'une des revendications 1 à 14, caractérisé en ce que l'insert (2) formé d'un matériau de contact est maintenu par brasage, soudage ou agrafage.

17. Collecteur selon l'une des revendications 2 à 14, caractérisé en ce que l'insert (2) formé d'un matériau de contact est fabriqué par injection à la flamme.

18. Collecteur selon l'une des revendications précédentes, caractérisé en ce que pour la fabrication de l'insert (2) formé d'un matériau de contact, le matériau de contact est inséré d'un seul tenant dans les rainures (4, 11, 12) de plusieurs lamelles du collecteur et qu'il est ensuite éliminé entre les lamelles.

19. Collecteur selon l'une des revendications 1 à 18, caractérisé en ce qu'on introduit des inserts (2) formés d'un matériau de contact, qui sont préfabriqués d'une manière adaptée de façon précise, dans les rainures concernées (4, 11, 12).
